# EUROPEAN PATENT APPLICATION

(11) **EP 4 804 655 A1**
(43) Date of publication of application: **09.09.2026**
(21) Application number: 24893234.5
(22) Date of filing: 05.11.2024
(51) Int. Cl.: H04W 56/00

(54) **SIGNAL TRANSMISSION METHOD AND COMMUNICATION APPARATUS**

(30) Priority: 20.11.2023 CN 202311553376
(71) Applicant: Huawei Technologies Co., Ltd., Shenzhen, Guangdong 518129 (CN)
(72) Inventor: WANG, Hanqing, Shenzhen, Guangdong 518129 (CN); WANG, Xiaohan, Shenzhen, Guangdong 518129 (CN)
(74) Representative: Goddar, Heinz J.
(86) International application number: PCT/CN2024/130029
(87) International publication number: WO 2025/108076

(57) **Abstract**

This application provides a signal transmission method and a communication apparatus. The method includes: A terminal device receives a plurality of downlink reference signals. The terminal device sends first information, where the first information indicates at least one delay amount. One of the at least one delay amount is a difference between delay estimates obtained by measuring two of the plurality of downlink reference signals, or one of the at least one delay amount is a delay estimate obtained by measuring one of the plurality of downlink reference signals. In this way, communication performance can be improved.

## Description

This application claims priority to Chinese Patent Application No. 202311553376.0, filed with the China National Intellectual Property Administration on November 20, 2023 and entitled "SIGNAL TRANSMISSION METHOD AND COMMUNICATION APPARATUS", which is incorporated herein by reference in its entirety.

### TECHNICAL FIELD

This application relates to the communication field, and more specifically, to a signal transmission method and a communication apparatus.

### BACKGROUND

Coherent joint transmission (coherent joint transmission, CJT) means that a plurality of network devices calculate a joint transmission weight through a joint channel formed by a channel between the plurality of network devices and a terminal device, and transmit the same data stream to the terminal device. This can implement coherent superposition and interference coherent cancellation of signals from the plurality of network devices at the terminal device, improve a received signal to interference plus noise ratio (signal to interference plus noise ratio, SINR) of the terminal device, and further improve a data transmission rate between the network device and the terminal device.

However, a prerequisite for implementing coherent joint is to ensure that carrier frequencies of network devices are the same and phases of sent signals are synchronized. In many scenarios, different network devices do not share a clock source. Therefore, a timing offset exists between the network devices, and CJT transmission performance is affected.

### SUMMARY

Embodiments of this application provide a signal transmission method and a communication apparatus, to improve communication performance.

According to a first aspect, a signal transmission method is provided. The method may be performed by a terminal device or a module (for example, a chip or a chip system) configured in (or used in) the terminal device. The following uses an example in which the terminal device performs the method for description.

The method includes: The terminal device receives a plurality of downlink reference signals. The terminal device sends first information, where the first information indicates at least one delay amount.

In Implementation 1, one of the at least one delay amount is a difference between delay estimates obtained by measuring two of the plurality of downlink reference signals.

In Implementation 2, one of the at least one delay amount is a delay estimate obtained by measuring one of the plurality of downlink reference signals.

For example, the plurality of downlink reference signals are from a plurality of TRPs, and one downlink reference signal is sent by one TRP.

According to the foregoing solution, the terminal device receives the plurality of downlink reference signals, and sends the first information to indicate a delay amount obtained by measuring the plurality of downlink reference signals. Therefore, after obtaining the first information, a network side may compensate for a phase difference that varies with different subcarriers and that is caused by different timing offsets between TRPs. This can improve transmission performance of CJT, thereby increasing a data transmission rate between a network device and the terminal device, and improving communication performance of a network.

With reference to the first aspect, in some implementations of the first aspect, for Implementation 1, the plurality of downlink reference signals include N downlink reference signals, the at least one delay amount includes N-1 delay amounts, and N is a positive integer. Alternatively, for Implementation 2, the plurality of downlink reference signals include N downlink reference signals, and the at least one delay amount includes N delay amounts.

A manner in which the first information indicates the at least one delay amount may include but is not limited to the following manners:
In an implementation, that the first information indicates the at least one delay amount includes: The first information includes a quantization bit of each delay amount, where the quantization bit is obtained based on a delay amount and a quantization spacing, and the quantization spacing is indicated by a network device by using signaling; or the quantization spacing is determined by a terminal device, and the first information further indicates the quantization spacing.

In another implementation, that the first information indicates the at least one delay amount includes: The first information indicates a phase level corresponding to each of the at least one delay amount and a bandwidth corresponding to the phase level.

According to the foregoing implementations, the network side and the terminal device may reach a consensus on a specific indication manner of the first information, so that the terminal device indicates the delay amount in a corresponding indication manner. The network side (for example, a first TRP and/or a second TRP) may interpret the first information in a corresponding manner, to obtain the delay amount. In this way, when indication overheads are reduced, a case in which an information transmission error is caused because no consensus is reached on an indication manner can be reduced.

With reference to the first aspect, in some implementations of the first aspect, one of the at least one delay amount occupies M bits in the first information, and M is predefined or is preconfigured by the network device for a terminal device by using signaling.

According to the foregoing solution, the network side and the terminal device may reach a consensus on a quantity of bits occupied by one delay amount in the first information, to reduce a case in which an information transmission error is caused because no consensus is reached.

With reference to the first aspect, in some implementations of the first aspect, the method further includes: The terminal device receives second information, where the second information is used to configure reporting of the at least one delay amount obtained by measuring the plurality of downlink reference signals.

The second information may specifically indicate a reporting parameter reported by the terminal device to the network side. For example, in Implementation 1, the second information indicates that the reporting parameter reported by the terminal device is a delay estimate obtained by measuring the plurality of downlink reference signals. In Implementation 2, the second information indicates that the reporting parameter reported by the terminal device is a difference between delay estimates obtained by measuring the plurality of downlink reference signals.

For example, the second information may be CSI reporting configuration information.

According to the foregoing solution, the terminal device may determine, based on an indication of the network side, a specific reporting parameter to be reported after the downlink reference signals are measured. In this way, the terminal device performs parameter reporting based on a requirement of the network side.

With reference to the first aspect, in some implementations of the first aspect, the second information further indicates that a first downlink reference signal is a downlink reference signal used as a reference in the plurality of downlink reference signals, the at least one delay amount includes a difference between a delay estimate obtained by measuring a reference signal in the plurality of downlink reference signals other than the first downlink reference signal and a first delay estimate, and the first delay estimate is obtained by measuring the first downlink reference signal.

According to the foregoing solution, in Implementation 2, the network side may notify the terminal device to report the difference between the delay estimates by using one of the plurality of downlink reference signals as a reference, and the network side and the terminal device reach a consensus on a specific manner of obtaining the difference between the delay estimates carried in the first information.

With reference to the first aspect, in some implementations of the first aspect, the method further includes: The terminal device receives data that is from a plurality of TRPs and that is obtained through coherent joint transmission, where the data obtained through coherent joint transmission is obtained by processing the at least one delay amount.

According to the foregoing solution, after the network side compensates, based on the first information reported by a terminal, for a phase difference that varies with different subcarriers and that is caused by the different timing offsets between TRPs, transmission performance of CJT can be improved, and communication performance of a network can be improved.

According to a second aspect, a signal transmission method is provided. The method may be performed by a network device or a module (for example, a chip or a chip system) configured in (or used in) the network device. The following uses an example in which the network device performs the method for description.

The method includes: The network device sends a second downlink reference signal. The network device receives first information, where the first information indicates at least one delay amount. One of the at least one delay amount is a difference between delay estimates of two of a plurality of downlink reference signals; or one of the at least one delay amount is a delay estimate of one of a plurality of downlink reference signals, where the plurality of downlink reference signals include the second downlink reference signal.

With reference to the second aspect, in some implementations of the second aspect, the method further includes: The network device determines, based on the at least one delay amount, a phase compensation amount corresponding to the plurality of downlink reference signals.

With reference to the second aspect, in some implementations of the second aspect, one of the at least one delay amount is a difference between delay estimates obtained by measuring two of the plurality of downlink reference signals, the plurality of downlink reference signals include N downlink reference signals, the at least one delay amount includes N-1 delay amounts, and N is a positive integer; or one of the at least one delay amount is a delay estimate obtained by measuring one of the plurality of downlink reference signals, the plurality of downlink reference signals include N downlink reference signals, and the at least one delay amount includes N delay amounts.

With reference to the second aspect, in some implementations of the second aspect, that the first information indicates the at least one delay amount includes: The first information includes a quantization bit of each delay amount, where the quantization bit is obtained based on a delay amount and a quantization spacing, and the quantization spacing is indicated by a network device by using signaling; or the quantization spacing is determined by a terminal device, and the first information further indicates the quantization spacing.

With reference to the second aspect, in some implementations of the second aspect, that the first information indicates the at least one delay amount includes: The first information indicates a phase level corresponding to each of the at least one delay amount and a bandwidth corresponding to the phase level.

With reference to the second aspect, in some implementations of the second aspect, one of the at least one delay amount occupies M bits in the first information, and M is predefined or is preconfigured by the network device for a terminal device by using signaling.

With reference to the second aspect, in some implementations of the second aspect, the method further includes: The network device sends second information, where the second information is used to configure the terminal device to report the at least one delay amount obtained by measuring the plurality of downlink reference signals.

With reference to the second aspect, in some implementations of the second aspect, the second information further indicates that a first downlink reference signal is a downlink reference signal used as a reference in the plurality of downlink reference signals, the at least one delay amount includes a difference between a delay estimate obtained by measuring a reference signal in the plurality of downlink reference signals other than the first downlink reference signal and a first delay estimate, and the first delay estimate is obtained by measuring the first downlink reference signal.

With reference to the second aspect, in some implementations of the second aspect, the plurality of downlink reference signals are reference signals sent by a plurality of TRPs.

With reference to the second aspect, in some implementations of the second aspect, the method further includes: The network device sends data of coherent joint transmission performed with at least one TRP, where the data coherent joint transmission is obtained by processing the at least one delay amount.

According to a third aspect, a signal transmission method is provided. The method may be performed by a terminal device or a module (for example, a chip or a chip system) configured in (or used in) the terminal device. The following uses an example in which the terminal device performs the method for description.

The method includes: The terminal device receives a plurality of downlink reference signals. The terminal device sends a plurality of uplink reference signals, where the plurality of uplink reference signals correspond to the plurality of downlink reference signals, and each of the plurality of uplink reference signals is determined based on a measurement quantity obtained by measuring a corresponding downlink reference signal.

With reference to the third aspect, in some implementations of the third aspect, the terminal device receives third information, where the third information indicates a correspondence between the plurality of downlink reference signals and the plurality of uplink reference signals.

With reference to the third aspect, in some implementations of the third aspect, the plurality of uplink reference signals are in one-to-one correspondence with the plurality of downlink reference signals.

With reference to the third aspect, in some implementations of the third aspect, the measurement quantity is used for phase compensation or delay compensation of an uplink reference signal.

According to a fourth aspect, a signal transmission method is provided. The method may be performed by a network device or a module (for example, a chip or a chip system) configured in (or used in) the network device. The following uses an example in which the network device performs the method for description.

The method includes: The network device sends a third downlink reference signal. The network device receives a first uplink reference signal, where the first uplink reference signal is determined based on a measurement quantity of the downlink reference signal.

With reference to the fourth aspect, in some implementations of the fourth aspect, the method further includes: The network device sends third information, where the third information indicates a correspondence between a plurality of downlink reference signals and a plurality of uplink reference signals, and one uplink reference signal in the correspondence is determined based on a measurement quantity obtained by measuring a corresponding downlink reference signal, where the third downlink reference signal corresponds to the first uplink reference signal in the correspondence.

With reference to the fourth aspect, in some implementations of the fourth aspect, the plurality of uplink reference signals are in one-to-one correspondence with the plurality of downlink reference signals.

With reference to the fourth aspect, in some implementations of the fourth aspect, the plurality of uplink reference signals correspond to a plurality of transmission points, and the method further includes:
The network device determines a first delay difference based on a first uplink delay estimate and a second uplink delay estimate, where the first uplink delay estimate is obtained based on an uplink reference signal that is received by a first transmission point and that corresponds to the first transmission point, and the second uplink delay estimate is obtained based on an uplink reference signal that is received by a second transmission point and that corresponds to the second transmission point.

The network device determines a second delay difference based on a third uplink delay estimate and a fourth uplink delay estimate, where the third uplink delay estimate is obtained based on an uplink reference signal that is received by the first transmission point and that corresponds to the second transmission point, and the fourth uplink delay estimate is obtained based on an uplink reference signal that is received by the second transmission point and that corresponds to the first transmission point.

The network device determines, based on the first delay difference and the second delay difference, a delay compensation amount for data of coherent joint transmission of the first transmission point and the second transmission point.

With reference to the fourth aspect, in some implementations of the fourth aspect, the measurement quantity is used for phase compensation or delay compensation of an uplink reference signal.

According to a fifth aspect, a signal transmission method is provided. The method may be performed by a terminal device or a module (for example, a chip or a chip system) configured in (or used in) the terminal device. The following uses an example in which the terminal device performs the method for description.

The method includes: The terminal device receives a downlink reference signal. The terminal device sends first information, where the first information indicates a delay estimate, and the delay estimate is obtained by measuring the downlink reference signal.

According to a sixth aspect, a signal transmission method is provided. The method may be performed by a network device or a module (for example, a chip or a chip system) configured in (or used in) the network device. The following uses an example in which the network device performs the method for description.

The method includes: The network device sends a first downlink reference signal, and the network device obtains a plurality of pieces of first information from a plurality of terminal devices. One piece of first information indicates one delay estimate, and one delay estimate is obtained by a terminal device that sends the first information by measuring a downlink reference signal received by the terminal device.

With reference to the sixth aspect, in some implementations of the sixth aspect, the network device sends configuration information to each of the plurality of terminal devices, where the configuration information is used to configure the terminal device to receive the downlink reference signal.

For example, one terminal device receives a downlink reference signal sent by one TRP, and downlink reference signals received by different terminal devices in the plurality of terminal devices are from different TRPs.

With reference to the sixth aspect, in some implementations of the sixth aspect, the network device determines a compensation amount of a timing offset between a plurality of TRPs based on the plurality of pieces of first information.

According to a seventh aspect, a communication apparatus is provided. In a design, the apparatus may include modules that are in one-to-one correspondence with and that perform the methods/operations/steps/actions according to any one of the first aspect or the implementations of the first aspect. The module may be implemented by a hardware circuit, software, or a combination of a hardware circuit and software. In a design, the apparatus includes: a transceiver unit, configured to receive a plurality of downlink reference signals; and a processing unit, configured to determine first information, where the first information indicates at least one delay amount. The transceiver unit is further configured to send the first information. One of the at least one delay amount is a difference between delay estimates obtained by measuring two of the plurality of downlink reference signals, or one of the at least one delay amount is a delay estimate obtained by measuring one of the plurality of downlink reference signals.

According to an eighth aspect, a communication apparatus is provided. In a design, the apparatus may include modules that are in one-to-one correspondence with and that perform the methods/operations/steps/actions according to any one of the second aspect or the implementations of the second aspect. The module may be implemented by a hardware circuit, software, or a combination of a hardware circuit and software. In a design, the apparatus includes a transceiver unit, configured to send a second downlink reference signal. The transceiver unit is further configured to receive first information, where the first information indicates at least one delay amount. A processing unit is configured to determine the at least one delay amount based on the first information. One of the at least one delay amount is a difference between delay estimates of two of a plurality of downlink reference signals; or one of the at least one delay amount is a delay estimate of one of a plurality of downlink reference signals, where the plurality of downlink reference signals include the second downlink reference signal.

According to a ninth aspect, a communication apparatus is provided. In a design, the apparatus may include modules that are in one-to-one correspondence with and that performs the methods/operations/steps/actions according to any one of the third aspect or the implementations of the third aspect. The module may be implemented by a hardware circuit, software, or a combination of a hardware circuit and software. In a design, the apparatus includes: a transceiver unit, configured to receive a plurality of downlink reference signals. The transceiver unit is configured to receive the plurality of downlink reference signals. A processing unit is configured to determine each of a plurality of uplink reference signals based on a measurement quantity obtained by measuring a corresponding downlink reference signal. The transceiver unit is further configured to send the plurality of uplink reference signals.

According to a tenth aspect, a communication apparatus is provided. In a design, the apparatus may include modules that are in one-to-one correspondence with and that performs the methods/operations/steps/actions according to any one of the fourth aspect or the implementations of the fourth aspect. The module may be implemented by a hardware circuit, software, or a combination of a hardware circuit and software. In a design, the apparatus includes: a processing unit, configured to determine to send a third downlink reference signal; and a transceiver unit, configured to send the third downlink reference signal. The transceiver unit is further configured to receive a third uplink reference signal, where the first uplink reference signal is determined based on a measurement quantity of the third downlink reference signal.

According to an eleventh aspect, a communication apparatus is provided, and includes a processor. The processor may implement the method according to any one of the first aspect to the sixth aspect and the possible implementations of the first aspect to the sixth aspect. Optionally, the communication apparatus further includes a memory. The processor is coupled to the memory, and may be configured to execute instructions in the memory, to implement the method according to any one of the first aspect to the sixth aspect and the possible implementations of the first aspect to the sixth aspect. Optionally, the communication apparatus further includes a communication interface, and the processor is coupled to the communication interface. In embodiments of this application, the communication interface may be a transceiver, a pin, a circuit, a bus, a module, or a communication interface of another type. This is not limited.

In an implementation, the communication apparatus is a communication device (for example, a terminal device or an access network device). When the communication apparatus is the communication device, the communication interface may be a transceiver or an input/output interface.

In another implementation, the communication apparatus is a chip configured in the communication device. When the communication apparatus is the chip configured in the communication device, the communication interface may be an input/output interface.

Optionally, the transceiver may be a transceiver circuit. Optionally, the input/output interface may be an input/output circuit.

According to a twelfth aspect, a processor is provided and includes: an input circuit, an output circuit, and a processing circuit. The processing circuit is configured to: receive a signal through the input circuit, and transmit the signal through the output circuit, to enable the processor to perform the method according to any one of the first aspect to the sixth aspect and the possible implementations of the first aspect to the sixth aspect.

In a specific implementation process, the processor may be one or more chips, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be the same circuit, where the circuit is used as the input circuit and the output circuit at different moments. Specific implementations of the processor and the various circuits are not limited in embodiments of this application.

According to a thirteenth aspect, a computer program product is provided. The computer program product includes a computer program (which may also be referred to as code or instructions). When the computer program is run, a computer is enabled to perform the method according to any one of the first aspect to the sixth aspect and the possible implementations of the first aspect to the sixth aspect.

According to a fourteenth aspect, a computer-readable storage medium is provided. The computer-readable storage medium stores a computer program (which may also be referred to as code or instructions). When the computer program is run on a computer, the computer is enabled to perform the method according to any one of the first aspect to the sixth aspect and the possible implementations of the first aspect to the sixth aspect.

According to a fifteenth aspect, a communication system is provided, and includes the foregoing at least one terminal device and at least one network device.

### BRIEF DESCRIPTION OF DRAWINGS

FIG. 1 is a diagram of a communication system applicable to an embodiment of this application;
FIG. 2 is another diagram of a communication system applicable to an embodiment of this application;
FIG. 3 is a diagram of a signal delay when a plurality of TRPs provide a CJT service for a terminal device according to an embodiment of this application;
FIG. 4 is a schematic flowchart of a signal transmission method according to an embodiment of this application;
FIG. 5 is a diagram of a time domain characteristic of a channel according to an embodiment of this application;
FIG. 6 is another schematic flowchart of a signal transmission method according to an embodiment of this application;
FIG. 7 is a block diagram of a communication apparatus according to an embodiment of this application; and
FIG. 8 is another diagram of a structure of a communication apparatus according to an embodiment of this application.

### DESCRIPTION OF EMBODIMENTS

The following describes technical solutions of this application with reference to accompanying drawings.

In embodiments of this application, "/" may represent an "or" relationship between associated objects. For example, A/B may represent A or B. "And/or" may indicate that there are three relationships between associated objects. For example, A and/or B may represent the following three cases: Only A exists, both A and B exist, and only B exists, where A and B may be singular or plural. For ease of describing the technical solutions in embodiments of this application, terms such as "first" and "second" may be used for differentiation in embodiments of this application. The terms such as "first" and "second" do not limit a quantity and an execution sequence, and the terms such as "first" and "second" do not limit a definite difference. In embodiments of this application, a term "example" or "for example" is used to represent giving an example, an illustration, or a description. Any embodiment or design solution described as "example" or "for example" should not be explained as being more preferred or having more advantages than another embodiment or design solution. A word like "example" or "for example" is used to present a related concept in a specific manner for ease of understanding. In embodiments of this application, "at least one (type)" may alternatively be described as "one (type) or more (types)", and "a plurality of (types)" may be two (types), three (types), four (types), or more (types). This is not limited in embodiments of this application.

The technical solutions in embodiments of this application may be applied to various communication systems, for example, a long term evolution (long term evolution, LTE) system, a 5th generation (5th generation, 5G) communication system, a wireless fidelity (wireless fidelity, Wi-Fi) system; and the communication method provided in this application may further be applied to a communication system that is evolved after 5G, for example, a 6th generation (6th generation, 6G) communication system, a future communication system, or another communication system. This is not limited in this application.

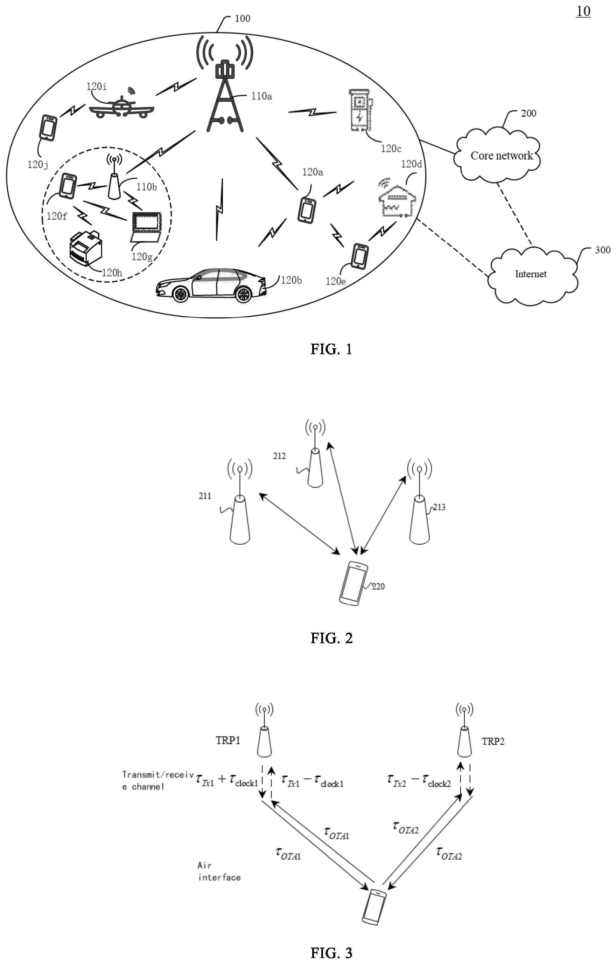

FIG. 1 is a diagram of a possible and non-limiting system. As shown in FIG. 1, a communication system 10 includes a radio access network (radio access network, RAN) 100 and a core network (core network, CN) 200. The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The access network node (or referred to as a RAN node) 110 is connected to the core network 200 in a wireless or wired manner. A core network device in the core network 200 and the access network node 110 in the RAN 100 may be different physical devices, or may be the same physical device that integrates a logical function of the core network and a logical function of the radio access network.

The RAN 100 may be a cellular system related to the 3rd generation partnership project (3rd generation partnership project, 3GPP), for example, a 4G or 5G mobile communication system, or a future-oriented evolved system (for example, a 6G mobile communication system). The RAN 100 may alternatively be an open access network (open RAN, O-RAN, or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The access network node 110 may also be sometimes referred to as an access network device, a RAN entity, an access node, or the like, and forms a part of the communication system, to help the terminal implement radio access. A plurality of access network nodes 110 in the communication system 10 may be nodes of the same type, or may be nodes of different types. In some scenarios, roles of the access network node 110 and the terminal 120 are relative to each other. For example, a network element 120i in FIG. 1 may be a helicopter or an uncrewed aerial vehicle, and may be configured as a mobile base station. For the terminal 120j that accesses the RAN 100 through the network element 120i, the network element 120i is a base station. However, for a base station 110a, the network element 120i is a terminal. Both the access network node 110 and the terminal 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the access network node may be a base station (base station), an evolved NodeB (evolved NodeB, eNodeB), an access point (access point, AP), a transmission reception point (transmission reception point, TRP), a next generation NodeB (next generation NodeB, gNB), a next generation NodeB in a 6th generation (6th generation, 6G) mobile communication system, a base station in a future mobile communication system, an access node in a Wi-Fi system, or the like. The access network node may be a macro base station (for example, 110a in FIG. 1), a micro base station or an indoor station (for example, 110b in FIG. 1), a relay node or a donor node, or a radio controller in a CRAN scenario. Optionally, the access network node may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or a part of functions of the access network node in this application may alternatively be implemented by a software function running on hardware, or may be implemented by a virtualization function instantiated on a platform (for example, a cloud platform). The access network node in this application may alternatively be a logical node, a logical module, or software that can implement all or the part of the functions of the access network node.

In another possible scenario, a plurality of access network nodes cooperate to assist the terminal in implementing radio access, and different access network nodes respectively implement a part of functions of the base station. For example, the access network node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

The terminal may alternatively be referred to as a terminal device, user equipment (user equipment, UE), a mobile station, a mobile terminal, or the like. The terminal may be widely used in various scenarios for communication. The scenarios include, for example, but are not limited to, at least one of the following scenarios: enhanced mobile broadband (enhanced mobile broadband, eMBB), ultra-reliable low-latency communication (ultra-reliable low-latency communication, URLLC), massive machine-type communications (massive machine-type communications, mMTC), D2D, V2X, machine-type communication (machine-type communication, MTC), internet of things (internet of things, IoT), virtual reality, augmented reality, industrial control, autonomous driving, telemedicine, a smart grid, smart furniture, smart office, smart wearable, smart transportation, a sensing terminal, a terminal with integrated sensing and communication, or a smart city. The terminal may be a mobile phone (for example, 120a, 120j, and 120e in FIG. 1), a tablet computer, a computer with a wireless transceiver function (for example, 120g in FIG. 1), customer-premises equipment (customer-premises equipment, CPE), a smart point of sale (point of sale, POS) machine, a wearable device, a vehicle (for example, 120b in FIG. 1), an uncrewed aerial vehicle, a helicopter, an airplane (for example, 120i in FIG. 1), a ship, a robot, a robot arm, a sensor, a perceptron, a smart home device (for example, 120h in FIG. 1), or the like.

FIG. 2 is a diagram of another system applicable to an embodiment of this application. The system may include a plurality of transmission points, for example, a transmission point 211, a transmission point 212, and a transmission point 213 shown in FIG. 2. The transmission point may be a transmission and reception point (transmission and reception point, TRP) that has an information sending function and an information receiving function. The system may further include at least one terminal device, for example, a terminal device 220 shown in FIG. 2. A plurality of TRPs shown in FIG. 2 may communicate with the terminal device 220 in a manner of coordination between the plurality of transmission points. For example, the plurality of TRPs may communicate with the terminal device in a manner of coherent joint transmission (coherent joint transmission, CJT). The plurality of TRPs transmit the same data stream to the terminal device in a joint transmission manner, to implement coherent superposition and interference coherent cancellation of signals at the terminal device, greatly improving a received signal to interference plus noise ratio (signal to interference plus noise ratio, SINR) of the terminal device, and further improving a data transmission rate between a network device and a terminal device.

In embodiments of this application, the TRP may be an access network node. For example, the TRP may be a network device (for example, an access network device), or the TRP may be configured in a network device. For example, the TRP may be a baseband unit (baseband unit, BBU), a remote radio unit (remote radio unit, RRU), or a distributed unit (distributed unit, DU) of the network device. Alternatively, the TRP may be an antenna panel of a network device or an antenna port group. A specific form of the TRP is not limited in this application. It should be understood that the TRP and the network device in this application may be interchangeable.

An operation performed by a network side described in embodiments of this application may be performed by a TRP on the network side, and the TRP may be a TRP participating in CJT of the terminal device. Alternatively, different operations performed by the network side may be performed by different apparatuses on the network side. For example, different operations may be separately performed by a CU and a DU. This is not limited in this application.

The following first analyzes impact of a timing offset between TRPs caused by non-ideal clock synchronization on CJT performance. As shown in FIG. 3, two TRPs, namely, a TRP 1 and a TRP 2, perform joint transmission for a terminal device. For downlink transmission from the TRP 1 to the terminal device, a transmit channel delay *τ*_{*Tx*1} of the TRP 1, a timing offset *τ*_{clock1} of the TRP 1 introduced due to a non-ideal clock, and an air interface transmission delay *τ*_{*OTA*1} from the TRP 1 to the terminal device are experienced. For uplink transmission from the terminal device to the TRP 1, an air interface transmission delay experienced from the terminal device to the TRP 1 is equal to that of the downlink transmission from the TPR 1 to the terminal device, both are *τ*_{*OTA*1}, a receive channel delay of the TRP 1 is *τ*_{*Rx*1}, and a timing offset introduced due to a non-ideal clock is -*τ*_{clock1}. The receive channel delay and the transmit channel delay are determined by hardware features of receive and transmit channels, and vary slowly with time. However, the timing offset is continuously accumulated with a clock frequency offset. Similarly, transmission between the TRP 2 and the terminal device also includes a transmit channel delay and a receive channel delay *τ*_{*Tx*2}, *τ*_{*Tx*1}, an air interface delay *τ*_{*OTA*2}, and an uplink timing offset *τ*_{clock2} and a downlink timing offset -*τ*_{clock2 ∘} that are of the TRP 2 and that are introduced by a non-ideal clock.

The air interface delay, the channel delay, and the timing offset may all be modeled as delays introduced in time domain for a signal sent by the TRP to the terminal device. Specifically, after a delay *τ* is introduced to a signal *x*(*t*), the signal may be represented as *x*(*t - τ*) in time domain, and may be represented as *X̂*(*ₖ*) *= e*^{*-j*2}*^{π·kfSC·τ}X*(*k*) in frequency domain, where *f_{SC}* represents a subcarrier frequency spacing, and *k* represents a subcarrier sequence number. An air interface channel response from a TRP *i* to the terminal device on a subcarrier *k* is denoted as *Hᵢ*(*k*). When there is a delay *τᵢ* 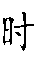 between the TRP *i* and the terminal device, the TRP *i* sends a signal *xᵢ*(*t*)*,* and after the terminal device receives the signal, a received signal obtained on the subcarrier *k* may be represented as *Hᵢ*(*k*)*X̂ᵢ*(*k*) *= Hᵢ*(*k*)*ee*^{*-j*2}*^{π·kfSC·τi}Xᵢ*(*k*) in frequency domain. Therefore, it can be learned that existence of the delay *τᵢ* is equivalent to that an additional phase is introduced to a channel on the subcarrier *k*, and an equivalent channel response may be represented as *Hᵢ*(*k*)*e*^{*-j*2*π·kfSC·τi*}. In addition, a magnitude of phase rotation is related to a subcarrier identifier *k,* and the delay *τᵢ* introduces different phase rotations on different subcarriers *k,* so that frequency selectivity of the channel is stronger.

It can be learned from the foregoing analysis that any "delay" difference (including different timing offsets, that is, *τ*_{clock1} - *τ*_{clock2} ≠ 0) from different TRPs to the terminal device introduces a phase difference that is of signals sent by different TRPs and that varies with subcarriers. For example, if a subcarrier spacing is 30 kHz, a timing offset *τ*_{clock1} - *τ*_{clock2} = between the TRP 1 and the TRP 2 is 130 ns. For a subcarrier 1, a frequency of the subcarrier 1 is *f*_{*SC*1} = 30 kHz, and a phase difference between TRPs is 2π × *f*_{*SC*1} × (*τ*_{clock1} - *τ*_{clock2}) = 1.4°. For a subcarrier 24, a frequency of the subcarrier 24 is *f*_{*SC*24} *=* 24 × 30 kHz, and a phase difference between TRPs is 2π × *f*_{*SC*24} × (*τ*_{clock1} - *τ*_{clock2}) = 33.7°. For a subcarrier 48, a frequency of the subcarrier 48 is *f*_{*SC*48} = 48 × 30 kHz, and a phase difference between TRPs is 2π × *f*_{*SC*48} × (*τ*_{clock1} - *τ*_{clock2}) = 67.5°.

Because each resource block (resource block, RB) includes 12 subcarriers, the foregoing three subcarriers are located in a frequency range corresponding to four RBs. In other words, a frequency range corresponding to the subcarrier 1 to the subcarrier 48 belongs to the four RBs. It can be learned that the phase difference between the TRPs varies greatly on different subcarriers of the four RBs. However, signal precoding is usually performed at a granularity of an RB group (RB group, RBG). Each RBG usually includes four RBs (or 48 resource elements (resource element, RE)), where one RE corresponds to one subcarrier in frequency domain, and all REs in each RBG share the same precoding. In this case, phase difference between TRPs on different subcarriers are different, and RBG-level precoding cannot ensure that signals can be coherently superposed on each RE. Therefore, the timing offset between the TRPs needs to be estimated in time, to compensate for the phase difference between the TRPs on each subcarrier, thereby ensuring a coherent superposition effect.

To resolve the foregoing problem, this application provides a solution in which a terminal device measures and reports a related parameter, to assist a network side in estimating and compensating for a phase difference that varies with different subcarriers and that is caused by different timing offsets between TRPs, thereby improving CJT transmission performance.

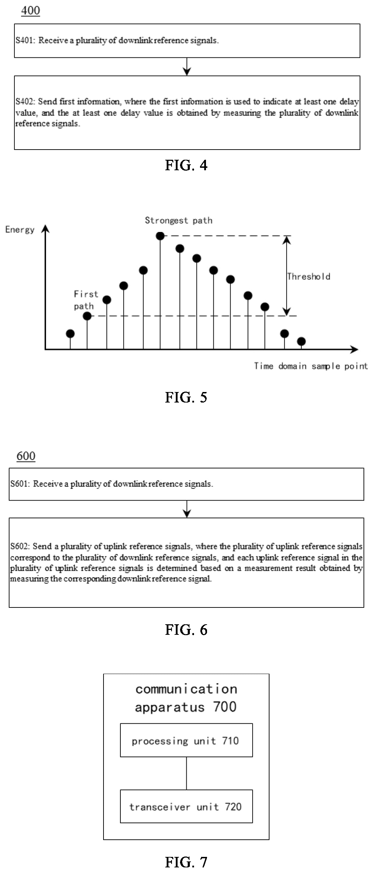

FIG. 4 is a schematic flowchart of a signal transmission method 400 according to an embodiment of this application. The method may include but is not limited to S401 and S402.

S401: A terminal device receives a plurality of downlink reference signals.

The plurality of downlink reference signals may be downlink reference signals sent by a plurality of reference signal ports on one downlink reference signal resource. Alternatively, the plurality of downlink reference signals may be downlink reference signals separately carried on a plurality of downlink reference signal resources. This is not limited in this application.

For example, the downlink reference signal may be a channel state reference signal (channel state information-reference signal, CSI-RS). Correspondingly, the downlink reference signal resource used to carry the downlink reference signal may be a CSI-RS resource.

The terminal device may receive the plurality of downlink reference signals based on a configuration on a network side. The plurality of reference signals may be from a plurality of TRPs, and the plurality of TRPs are a plurality of TRPs that transmit data for the terminal device in a CJT manner (or need to transmit data to the terminal device in a CJT manner).

The plurality of downlink reference signals may be two downlink reference signals, and the two downlink reference signals are respectively reference signals sent by two TRPs. Alternatively, the plurality of downlink reference signals may include at least two downlink reference signals, and the at least two downlink reference signals are respectively sent by different TRPs.

For example, the terminal device receives reference signal resource configuration information from a network side (for example, from one of the plurality of TRPs), and the reference signal resource configuration information is used to configure the terminal device to receive the plurality of downlink reference signals. The reference signal resource configuration information may specifically configure a sequence, a time-frequency resource, and the like of each of the plurality of downlink reference signals. The terminal device may receive the plurality of downlink reference signals based on the reference signal resource configuration information.

For example, the reference signal resource configuration information may be CSI-RS resource configuration information. The reference signal resource configuration information may be carried in a radio resource control (radio resource control, RRC) message.

It should be noted that the terminal device may receive the plurality of downlink reference signals and feed back corresponding parameters based on only a configuration on the network side, and the terminal device does not need to learn of a TRP from which each reference signal comes.

S402: The terminal device sends first information, where the first information indicates at least one delay amount, and the at least one delay amount is obtained by measuring the plurality of downlink reference signals.

The following uses an example in which a first TRP and a second TRP perform CJT transmission for the terminal device for description. In this case, the first TRP and the second TRP each send one downlink reference signal, where the first TRP sends a first downlink reference signal, and the second TRP sends a second downlink reference signal. It should be understood that, in specific implementation, the terminal device may alternatively perform CJT transmission for the terminal device by using at least two TRPs. In this case, each TRP sends one downlink reference signal. Correspondingly, the terminal device receives downlink reference signals from the at least two TRPs. For a specific scenario in which there are at least two TRPs, refer to the following descriptions of the first TRP and the second TRP for implementation. Details are not described herein again.

The first TRP sends the first downlink reference signal, and a corresponding received signal of the terminal device may be represented as: ${Y}_{1 \to UE} = {h}_{1 , k}^{DL} ⋅ {s}_{1 , k} = {h}_{1 , k} ⋅ {e}^{j 2 π ⋅ \left({τ}_{OTA 1}+{τ}_{Tx 1}+{τ}_{clock 1}\right) ⋅ k} ⋅ {s}_{1 , k} ,$
where ${h}_{1 , k}^{DL}$ is an equivalent channel response between the first TRP and the terminal device on a subband *k,* and *k* is a subband identifier. For example, the subband may be an RE. Specifically, each RB may have some or all REs used to carry a downlink reference signal. *s*_{1,*k*} is a first downlink reference signal on the subband k, *h*_{1,*k*} is an air interface channel response between the first TRP and the terminal device, *τ*_{*OTA*1} is an air interface transmission delay between the first TRP and the terminal device, *τ*_{*Tx*1} is a transmit channel delay of the first TRP, and *τ*_{*clock*1} is a timing offset of the first TRP introduced due to a non-ideal clock.

[**0110]** The second TRP sends the second downlink reference signal, and a corresponding received signal of the terminal device may be represented as: ${Y}_{2 \to UE} = {h}_{2 , k}^{DL} ⋅ {s}_{2 , k} = {h}_{2 , k} ⋅ {e}^{j 2 π ⋅ \left({τ}_{OTA 2}+{τ}_{Tx 2}+{τ}_{clock 2}\right) ⋅ k} ⋅ {s}_{2 , k} ,$
where ${h}_{2 , k}^{DL}$ is an equivalent channel response between the second TRP and the terminal device on a subband *k, s*_{2,*k*} is a second downlink reference signal on a subband k, *h*_{2,*k*} is an air interface channel response between the second TRP and the terminal device, *τ*_{*TOTA*2} is an air interface transmission delay between the second TRP and the terminal device, *τ*_{*Tx*2} is a transmit channel delay of the second TRP, and *τ*_{clock2} is a timing offset of the second TRP introduce due to a non-ideal clock.

After receiving the plurality of downlink reference signals, the terminal device may measure each downlink reference signal, and estimate a corresponding delay. For example, the terminal device may estimate a first-path delay, or may estimate a strongest-path delay. A specific estimation method is described by using an example in which the terminal device estimates the first-path delay based on the first downlink reference signal sent by the first TRP. The method may include but is not limited to the following steps.

Step 1: The terminal device estimates, by using a least square (least square, LS) method, channel responses on all subbands that carry the first downlink reference signal. Channel estimation on a subband k is used as an example, and an estimate of the channel response ${h}_{1 , k}^{DL}$ may be represented as: ${\hat{h}}_{1 , k}^{DL} = \frac{{Y}_{1 \to UE}}{{s}_{1 , k}} .$

Step 2: The terminal device sorts, in ascending order of frequencies, the channel responses on different subbands that are obtained through estimation in step 1, to obtain a sequence $\left[{\hat{h}}_{1 , 0}^{DL} {\hat{h}}_{1 , 1}^{DL} ⋯ {\hat{h}}_{1 , k}^{DL} ⋯ {\hat{h}}_{1 , K - 1}^{DL}\right]$, where *K* represents a total quantity of subbands for transmitting the first downlink reference signal. The terminal device performs a zero padding operation at a tail of the sequence, and pads the sequence to a total of *N_{fft}* points, to obtain a sequence $\left[{\hat{h}}_{1 , 0}^{DL} {\hat{h}}_{1 , 1}^{DL} ⋯ {\hat{h}}_{1 , k}^{DL} ⋯ {\hat{h}}_{1 , K - 1}^{DL} 0 0 ⋯ 0\right]$. Generally, *N_{fft} =* 2*^{P}* is used, where *P* is a positive integer, and *N_{fft}* may be predefined or may be indicated by the network side. The network side may directly indicate *N_{fft}* or may indicate *P* to indicate *N_{fft}.* Optionally, a plurality of candidate values of *P* may be predefined, and the network side indicates one of the candidate values *P*, so that the terminal device determines *N_{fft}.*

Step 3: Perform inverse fast Fourier transform (inverse fast Fourier transform, IFFT) with a quantity of points being *N_{fft}* on the sequence obtained through zero padding in step 2, to convert an estimate of a channel response in frequency domain into that in time domain, to obtain a time domain characteristic of a channel, where the time domain characteristic has different energy at different time domain sampling points. FIG. 5 is a diagram of a time domain characteristic of a channel.

Step 4: The terminal device may determine a location of a sampling point with strongest energy in time domain, where a sequence number corresponding to the sampling point with strongest energy is *Iₘₐₓ* ∈ {0,1, *··· , N_{fft} -* 1}, and a delay estimate corresponding to a strongest path may be obtained based on *Iₘₐₓ.* Further, the terminal device may find, based on a specific threshold setting, a sampling point whose energy difference from the sampling point with strongest energy is not greater than the threshold before the sampling point with strongest energy, denoting a number of the sampling point as *I_{first},* and may obtain a delay estimate corresponding to a first path based on *I_{first}.*

In the foregoing delay estimation method, a delay estimate *τ* corresponding to a sequence number *I* of a time domain sampling point may be represented as: $τ = \frac{1}{{N}_{fft} \times Δ {f}_{ref}} \times I ,$
where a value of *I* may be *Iₘₐₓ, I_{first},* or another sequence number. The value of *I* may be determined according to a specific implementation in which a delay estimate corresponding to a path is used as a delay estimate obtained by measuring a reference signal. Δ*f_{ref}* represents a frequency spacing between two adjacent subbands that carry the first downlink reference signal, and Δ*f_{ref}* is an integer multiple of a subcarrier spacing. For example, the downlink reference signals are placed on one RE of each RB at an equal spacing, and Δ*f_{ref}* is 12 times the subcarrier spacing.

According to the foregoing delay estimation method, the terminal device may obtain a first delay estimate *τ*_{*DL*1} by measuring the first downlink reference signal. The first delay estimate *τ*_{*DL*1} includes the air interface transmission delay *τ*_{*OTA*1}, the transmit channel delay of the first TRP *τ*_{*Tx*1}, and the timing offset of the first TRP *τ*_{*clock*1}, that is, ${τ}_{DL 1} = {τ}_{OTA 1} + {τ}_{Tx 1} + {τ}_{clock 1} .$

Similarly, according to the foregoing delay estimation method, the terminal device may obtain a second delay estimate *τ*_{*DL*2} by measuring the second downlink reference signal. The second delay estimate *τ*_{*DL*2} includes the air interface transmission delay *τ*_{*OTA*2}, the transmit channel delay of the second TRP *τ*_{*Tx*2}, and the timing offset of the second TRP *τ*_{*clock*2}, that is, ${τ}_{DL 2} = {τ}_{OTA 2} + {τ}_{Tx 2} + {τ}_{clock 2} .$

In Implementation 1, the first information sent by the terminal device in S402 indicates at least one delay amount, the at least one delay amount may include a delay estimate obtained by the terminal device by measuring a downlink reference signal. In other words, the delay amount is the delay estimate. One of the at least one delay amount is a delay estimate obtained by measuring one of the plurality of downlink reference signals.

For example, the first information indicates the first delay estimate *τ*_{*DL*1} obtained by the terminal device by measuring the first downlink reference signal and the second delay estimate *τ*_{*DL*2} obtained by the terminal device by measuring the second downlink reference signal. If a quantity of downlink reference signals included in the plurality of downlink reference signals received by the terminal device in S401 is N, for example, N≥2, the at least one delay amount indicated by the first information includes N delay estimates. In other words, the delay amount indicated by the first information includes a delay estimate obtained by the terminal device by measuring each of the N downlink reference signals.

In Implementation 2, the first information sent by the terminal device in S402 indicates at least one delay amount, and the at least one delay amount may include a difference between the at least one delay estimate. In other words, the delay amount is the difference between the delay estimates. A difference of each delay estimate is a difference between delay estimates obtained by measuring two downlink reference signals in the plurality of downlink reference signals.

For example, the first information indicates a difference between delay estimates, and the difference is Δ*τ*_{*DL*21}. The difference Δ*π*_{*DL*21} is a difference between the second delay estimate *τ*_{*DL*2} obtained by measuring the second downlink reference signal and the first delay estimate *τ*_{*DL*1} obtained by measuring the first downlink reference signal, and the difference Δ*τ*_{*DL*21} is denoted as Δ*τ*_{*DL*21} = *τ*_{*DL*2} *- τ*_{*DL*1}.

Optionally, the difference between the at least one delay estimate indicated by the first information includes a difference between a first delay estimate and a delay estimate obtained by measuring each of the plurality of downlink reference signals other than the first downlink reference signal, and the first delay estimate is obtained by measuring the first downlink reference signal.

If the quantity N of downlink reference signals received by the terminal device is greater than 2, for example, N is 3, 4, ..., or the like, a network side (for example, one of a plurality of TRPs) may indicate, to the terminal device by using indication information, that one of the plurality of downlink reference signals is used as a reference. For example, the indication information may include a resource identifier of a reference signal, and the indication information may include a resource identifier of a first downlink reference signal. After the terminal device receives the indication information, determining that the first downlink reference signal is a reference downlink reference signal in the plurality of downlink reference signals, and determining, by the terminal device by using the first delay estimate obtained by measuring the first downlink reference signal as a reference delay estimate, a difference between the first delay estimate and a delay estimate obtained by measuring another downlink reference signal. For example, the indication information may be carried in the reporting configuration information (namely, the second information) described below.

For example, the downlink reference signal received by the terminal device further includes a third downlink reference signal, and a delay estimate obtained by the terminal device by measuring the third downlink reference signal is *τ*_{*DL*3}. The terminal device may determine, based on a network-side configuration, that the delay estimate *τ*_{*DL*1} obtained by measuring the first downlink reference signal is used as a reference, and the terminal device may determine a difference between the delay estimate *τ*_{*DL*3} and the delay estimate *τ*_{*DL*1}, namely Δ*τ*_{*DL*31}, where Δ*τ*_{*DL*31} = *τ*_{*DL*3} *- τ*_{*DL*1}. The at least one difference between delay estimates indicated by the first information further includes the difference Δ*τ*_{*DL*31}*.* If the terminal device receives the downlink reference signals in S401, the first information indicates N-1 differences between transmission delays.

The terminal device may obtain the second information delivered by the network side. The second information may be referred to as reporting configuration information. For example, the reporting configuration information may be CSI reporting configuration information, and the reporting configuration information may be carried in an RRC message. For example, the reporting configuration information may be used to configure a reporting parameter, a reference signal resource configuration associated with reporting, and the like. The terminal device may report the delay amount to the network side based on the reporting configuration information and the plurality of received downlink reference signals, so that the network side determines, based on the delay amount reported by the terminal device, a compensation amount used to compensate for a phase difference that is caused by different timing offsets between the TRPs and that varies with subcarriers. For example, the reporting configuration information may indicate a reporting parameter reported by the terminal device. For example, the reporting configuration information may indicate that the reporting parameter reported by the terminal device is a latency estimate (that is, the foregoing implementation 1). In this case, the terminal device may report, based on the reporting configuration information by using the first information, a latency estimate obtained by measuring each of the plurality of downlink reference signals. Alternatively, the reporting configuration information may indicate that a reporting parameter reported by the terminal device is a difference of a delay estimate (that is, the foregoing implementation 2), and instruct the terminal device to use the first downlink reference signal as a reference. In this case, the terminal device may measure each of the plurality of uplink reference signals based on the reporting configuration information to obtain a plurality of delay estimates, and determine, by using the first delay estimate as a reference, a difference between another delay estimate and the first delay estimate determined by the terminal device by using the first information.

The following describes, by using an example, a specific manner in which the first information indicates the delay amount.

In the first information, one delay amount occupies M bits, where M is a positive integer, and M may be predefined or preconfigured by the network device for the terminal device by using signaling (for example, the reporting configuration information described above). After determining a delay amount, the terminal device quantizes the delay amount to obtain M quantized bits of the delay amount.

In Example 1, the terminal device quantizes the latency amount in a uniform quantization manner, the first information may indicate a quantity of time units included in each of the at least one latency amount, and the time unit is predefined or preconfigured by the network device for the terminal device by using signaling.

For example, the terminal device quantizes the delay amount in a uniform quantization manner. In other words, the terminal device quantizes the delay amount by using an equal quantization spacing. The quantization spacing is a quantized time unit. M quantized bits of one delay amount in the first information may include bits used to indicate that the delay amount is a positive value or a negative value, and the quantized bits further include a binary representation of a first quantity. The first quantity is a quantity of quantization spacings included in the delay amount.

After obtaining the delay amount through measurement, the terminal device may quantize the delay amount based on a determined quantization spacing Δ*τᵤ* and a determined quantity of quantization bits. The quantization bits may further include 1 bit used to indicate that the delay amount is a positive value or a negative value. For example, a most significant bit of the quantization bits is used to indicate that the delay amount is a positive value or a negative value, and subsequent M-1 bits are used to indicate binary representation of the first quantity. Using quantization of the first delay estimate *τ*_{*DL*1} as an example, the terminal device may determine a first quantity Q in the following manner:
$Q = \left⌊\frac{\left|{τ}_{DL 1}\right|}{Δ {τ}_{u}}\right⌋$

In the foregoing formula, the symbol |·| indicates taking an absolute value, and the symbol $\left⌊⋅\right⌋$ indicates rounding down.

For example, the quantity M of quantization bits of the first delay estimate is 4, where the first bit is used to indicate *τ*_{*DL*1} is a positive value or a negative value. For example, if the bit is 1, it indicates a positive value, and if the bit is 0, it indicates a negative value. If the first delay estimate is a positive value, the first bit of the quantization bits is 1. The subsequent three bits of the quantization bits are a binary representation of Q. For example, if Q=6, the binary representation of Q is 110. Therefore, the four quantization bits of the first delay estimate *τ*_{*DL*1} in the first information are 1110. After receiving the first information, the network side may obtain *τ*_{*DL*1} according to the quantization bits of the first delay estimate and the Q quantization spacing Δ*τᵤ.*

For another example, the terminal device may also quantize the delay amount in a nonuniform quantization manner, that is, quantization spacings used for quantization are not equal.

Example 2: The terminal device may report the latency amount based on the sequence number of the time domain sampling point.

For the foregoing implementation 1, the delay amount indicated by the first information is a delay estimate obtained by measuring the downlink reference signal, and the first information may indicate the delay estimate by indicating a sequence number of a time domain sampling point corresponding to the delay estimate. In other words, the first information implicitly indicates the delay estimate by using the sequence number of the time domain sampling point.

For example, using the first delay estimate *τ*_{*DL*1} as an example, a sequence number of a time domain sampling point corresponding to the first delay estimate *τ*_{*DL*1} is *I*_{*DL*1}, where *I_{DL1}* ∈ {0,1, ··· *, N_{fft} -* 1}. The M bits that are in the first information and that are used to indicate the first delay estimate are a binary representation of the sequence number *I*_{*DL*1} of the time domain sampling point, where *N_{fft}* = 2*^{P}*, and M = *P*. After obtaining the first information, the network side may determine the first delay estimate *τ*_{*DL*1} based on the sequence number *I*_{*DL*1} and the expression, described above, of the delay estimate τ corresponding to the time domain sampling point sequence number *I*. For another delay estimate indicated by the first information, refer to an indication manner of the first delay estimate for implementation. Details are not described herein again.

For the foregoing implementation 2, the delay amount indicated by the first information is a difference between delay estimates, and the first information may implicitly indicate the difference between the delay estimates by indicating a difference between sequence numbers of two time domain sampling points corresponding to the difference between the delay estimates.

For example, a difference Δ*τ*_{*DL*21} between the second delay estimate *τ*_{*DL*2} and the first delay estimate *τ*_{*DL*1} is used as an example. A sequence number of a time domain sampling point corresponding to the first delay estimate *τ*_{*DL*1} is *I*_{*DL*1}, and a sequence number of a time domain sampling point corresponding to the second delay estimate *τ*_{*DL*2} is *I*_{*DL*2}*,* where *I*_{*DL*1}, *I*_{*DL*2} ∈ {0,1, ··· , *N_{fft} -* 1}. The terminal device may determine that a difference between the sequence numbers of two time domain sampling points corresponding to the difference Δ*τ*_{*DL*21} between the delay estimates is *I*_{*DL*21} *= I*_{*DL*2} *- I*_{*DL*1}. The M bits that are in the first information and that are used to indicate the difference between the delay estimates include 1 bit used to indicate that *I*_{*DL*21} is a positive value or a negative value, and the M bits further include a binary representation of the sequence-number difference *I*_{*DL*21}*,* that is, M=1+*P*. After obtaining the first information, the network side may determine the difference *τ*_{*DL*21} between the delay estimates based on the sequence-number difference *I*_{*DL*21} and the expression, described above, of the delay estimate *τ* corresponding to the time domain sampling point sequence number *I* (because in the expression, the sequence number *I* and the delay estimate *τ* are in a linear relationship, the difference between the two parameters still satisfies the linear relationship, and the first delay estimate *τ*_{*DL*1} is used as the reference). If the terminal device further needs to report another difference between delay estimates, for the other difference between delay estimates indicated by the first information, refer to the indication manner of the difference between the delay estimates for implementation. Details are not described herein again.

In Example 3, the first information includes an identifier of a phase level corresponding to each delay amount and a bandwidth corresponding to the phase level.

In other words, the first information may implicitly indicate each delay amount in a manner of indicating the identifier of the phase level corresponding to each delay amount and the bandwidth corresponding to the corresponding level.

For example, the delay amount obtained by the terminal device through measurement is 200 ns, and the delay amount may be the delay estimate in the foregoing Implementation 1, or may be a difference between the delay estimates in the foregoing Implementation 2. A plurality of candidate phase levels and corresponding identifiers may be predefined. For example, the plurality of candidate phase levels may include *π*/4, *π*/2, *π*, and the corresponding identifiers are 0, 1, and 2 respectively. The terminal device may determine one phase level from a plurality of phase variation amounts based on the delay amount, for example, *π*/2. If a subcarrier spacing *f_{SC}* is 30 kHz, the terminal device may determine, based on a relationship among the delay amount, bandwidth, and phase, a bandwidth corresponding to the phase level. Specifically, the terminal device may determine a quantity of subcarriers included in the bandwidth, namely 2*π · Kf_{SC} · τ* = *π*/2, where *π*/2 is the phase variation amount and *Kf_{SC}* is the corresponding frequency bandwidth. In other words, when the delay amount is 200 ns, after a frequency bandwidth *Kf_{SC}* of *K* = 41.66 subcarriers, a phase difference variation amount is *π*/2. The first information sent by the terminal device may include an identifier of the phase level *π*/2, namely identifier 1, and indicate the quantity of subcarriers *K* included in the bandwidth. A manner in which the first information indicates the quantity of subcarriers *K* may be that the first information includes a binary representation obtained by rounding down the quantity K of subcarriers, or that the first information includes quantization bits of the quantity K of subcarriers, where the quantization bits are obtained by quantizing the quantity of subcarriers based on a quantization spacing of the quantity of subcarriers K. For a specific quantization manner, refer to the quantization manner of the delay amount described above. Details are not described herein again.

The foregoing describes that the terminal device may select one phase range from the plurality of candidate phase ranges. However, this application is not limited thereto. In another manner, one phase range may be predefined or preconfigured by a network side by using signaling (for example, preconfigured by reporting measurement information by using CSI). The terminal device may determine, based on the delay amount and the phase level, the quantity of subcarriers included in the bandwidth corresponding to the phase level, and the first information sent by the terminal device includes the quantity of subcarriers.

The network side (for example, one or more of the plurality of TRPs) may receive the first information, and may determine a phase compensation amount on each subcarrier based on the at least one delay amount indicated by the first information. A specific compensation manner of the phase difference may be that the plurality of TRPs separately perform phase compensation, or that some of the plurality of TRPs perform phase compensation on a signal. For example, when two TRPs participate in CJT, the two TRPs may separately perform phase compensation on a signal based on the first information, or one of the two TRPs may perform phase compensation on a signal based on the first information. This is not limited in this application. If the first information indicates that a difference between the first delay estimate and the second delay estimate is Δ*τ*_{*DC*21}*,* a phase compensation amount on a subcarrier k may be determined as 2*π · kf_{SC}* · *Δ*τ_{*DL*21}, and compensation is performed by the first TRP. Therefore, a phase difference that is between the first TRP and the second TRP, varies with different subcarriers, and is introduced due to different timing offsets is compensated. Through the foregoing compensation on phase differences on different subcarriers, transmission performance of data transmission performed by the plurality of TRPs for the terminal device by using CJT can be improved.

In the embodiment shown in FIG. 4, a manner in which the terminal device reports the delay amount to the network side after measuring the plurality of downlink reference signals is described, to assist the network side in compensating for a phase difference that is caused by different timing offsets between TRPs and that changes with different subcarriers. The following describes another manner in which the terminal device assists the network side in compensating for the phase difference that varies with different subcarriers and that is caused by different timing offsets between TRPs provided in this application. In this manner, after receiving a plurality of downlink reference signals, the terminal device determines pre-compensation amounts of a plurality of uplink reference signals based on a delay amount obtained through measurement, and then the terminal device sends the plurality of uplink reference signals obtained through pre-compensation, so that the network side can obtain estimated timing offsets between the plurality of TRPs based on the received uplink reference signals, therefore, a phase compensation amount on each subcarrier is determined. This manner can reduce reporting overheads of the terminal device, and improve precision of the phase compensation amount obtained by the network side.

FIG. 6 is a schematic flowchart of a signal transmission method 600 according to an embodiment of this application. The method may include but is not limited to S601 and S602. It should be understood that for content that is in the embodiment shown in FIG. 6 and that is the same as that in the embodiment shown in FIG. 4, refer to the foregoing description of the embodiment shown in FIG. 4. Details are not described herein again.

S601: The terminal device receives a plurality of downlink reference signals.

After receiving the plurality of downlink reference signals, the terminal device may measure each downlink reference signal to obtain a delay estimate. For example, the plurality of downlink reference signals include a first downlink reference signal and a second downlink reference signal, and the terminal device may measure the first downlink reference signal to obtain a delay estimate *τ*_{*DL*1}, where *τ*_{*DL*1} includes an air interface transmission delay *τ*_{*OTA*1}, a transmit channel delay *τ*_{*Tx*1} of the first TRP, and a timing offset *τ*_{*clock*1} of the first TRP introduced due to a non-ideal clock, that is: ${τ}_{DL 1} = {τ}_{OTA 1} + {τ}_{Tx 1} + {τ}_{clock 1} ,$

The terminal device may measure the second downlink reference signal to obtain a transmission delay *τ*_{*DL*2}, where *τ*_{*DL*2} includes an air interface transmission delay *τ*_{*OTA*2}, a transmit channel delay *τ*_{*Tx*2} of the second TRP, and a timing offset *τ*_{clock2} of the second TRP introduced due to a non-ideal clock, that is: ${τ}_{DL 2} = {τ}_{OTA 2} + {τ}_{Tx 2} + {τ}_{clock 2 °}$

S602. The terminal device sends a plurality of uplink reference signals, where the plurality of uplink reference signals correspond to the plurality of downlink reference signals, and each of the plurality of uplink reference signals is determined based on a measurement quantity obtained by measuring a corresponding downlink reference signal.

For example, the uplink reference signal may be a sounding reference signal (sounding reference signal, SRS), or may be another uplink reference signal.

The plurality of uplink reference signals may be a plurality of uplink reference signals sent on one uplink reference signal resource by using a plurality of reference signal ports. Alternatively, the plurality of uplink reference signals may be a plurality of uplink reference signals that are separately sent on a plurality of uplink reference signal resources. This is not limited in this application. For example, the uplink reference signal resource may be an SRS resource.

The terminal device may obtain third information from a network side (for example, from the first TRP or the second TRP), where the third information is used to indicate a correspondence between the plurality of uplink reference signals and the plurality of downlink reference signals. determining, by the terminal device, a correspondence between the plurality of uplink reference signals and the plurality of downlink reference signals based on the third information.

The plurality of uplink reference signals are in one-to-one correspondence with the plurality of downlink reference signals sent in S602. For example, in the correspondence, the first downlink reference signal corresponds to the first uplink reference signal, and the second downlink reference signal corresponds to the second uplink reference signal. Each of the plurality of uplink reference signals is determined based on a measurement quantity obtained by measuring a corresponding downlink reference signal.

In an example, the reference signal resource configuration information of the downlink reference signal includes resource indication information of each downlink reference signal (that is, an example of the third information), and the resource indication information is used to indicate a resource identifier of each downlink reference signal. The resource indication information may further include a resource identifier of an uplink reference signal corresponding to the downlink reference signal. The terminal device may determine the correspondence between the downlink reference signal and the uplink reference signal based on the resource indication information of the downlink reference signal. For example, the resource indication information of the first downlink reference signal includes a resource identifier of the first uplink reference signal. The resource indication information of the second downlink reference signal includes a resource identifier of the second uplink reference signal.

In another example, the reference signal resource configuration information of the uplink reference signal includes resource indication information of each uplink reference signal (that is, another example of the third information), and the resource indication information is used to indicate a resource identifier of each uplink reference signal. The resource indication information may further include a resource identifier of a downlink reference signal corresponding to the uplink reference signal. The terminal device may determine the correspondence between the uplink reference signal and the downlink reference signal based on the resource indication information of the uplink reference signal. For example, the resource indication information of the first uplink reference signal includes a resource identifier of the first downlink reference signal. The resource indication information of the second uplink reference signal includes a resource identifier of the second downlink reference signal.

Specifically, the terminal device may determine the first uplink reference signal based on the correspondence and a measurement quantity of the first downlink reference signal, where the measurement quantity is a transmission delay obtained by the terminal device by measuring the downlink reference signal. The terminal device may determine, based on a delay estimate *τ*_{*DL*1} obtained by measuring the first downlink reference signal, a pre-compensation amount *e*^{*j*2*π*·τ*DL*1*·k*} of the first uplink reference signal on the subband k, where the delay estimate *τ*_{*DL*1} is used and *e*^{*j*2*π*·τ*DL*1*·k*} may be represented as: ${e}^{j 2 π ⋅ {τ}_{DL 1} ⋅ k} = {e}^{j 2 π ⋅ {τ}_{OTA 1} ⋅ k} ⋅ {e}^{j 2 π ⋅ \left({τ}_{Tx 1}+{τ}_{clock 1}\right) ⋅ k} ,$

The terminal device may obtain the first uplink reference signal *s'*_{*UL*1*,k*} carried on the subband k by performing, by using the pre-compensation amount, frequency domain pre-compensation on the uplink reference signal *s*_{*UL*1*,k*} carried on the subband k. In other words, the first uplink reference signal is an uplink reference signal obtained by performing pre-compensation on the uplink reference signal based on the pre-compensation amount. Specifically, *s'*_{*UL*1,*k*} is obtained by multiplying *s*_{*UL*1,*k*} by *e*^{*j*2*π*·τ*DL*1*·k*}, and *s'*_{*UL*1,*k*} may be represented as: $s {′}_{UL 1} = {e}^{j 2 π ⋅ {τ}_{OTA 1} ⋅ k} ⋅ {e}^{j 2 π ⋅ \left({τ}_{Tx 1}+{τ}_{clock 1}\right) ⋅ k} ⋅ {s}_{UL 1 , k} ,$

The plurality of uplink reference signals sent by the terminal device include the first uplink reference signal. Correspondingly, the plurality of TRPs participating in CJT receive the first uplink reference signal from the terminal device. For the first uplink reference signal, a corresponding received signal of the first TRP on the subband k may be represented as:
${Y}_{UE 1 \to 1} = {h}_{1 , k} ⋅ {e}^{j 2 π ⋅ \left({τ}_{OTA 1}+{τ}_{Rx 1}-{τ}_{clock 1}\right) ⋅ k} ⋅ {e}^{j 2 π ⋅ {τ}_{OTA 1} ⋅ k} ⋅ {e}^{j 2 π ⋅ \left({τ}_{Tx 1}+{τ}_{clock 1}\right) ⋅ k} ⋅ {s}_{UL 1 , k} ,$

For definitions of parameters in the expression in the embodiment shown in FIG. 6, refer to the description in the embodiment shown in FIG. 4. Details are not described herein again. The first TRP may measure a received signal corresponding to the first uplink reference signal to obtain an uplink delay estimate *τ*_{*UL*11}*.* Pre-compensation performed on the first uplink reference signal in frequency domain is superimposed on various delays introduced in uplink transmission from the terminal device to the first TRP. An uplink delay estimate *τ*_{*UL*11} measured in a delay domain may be represented as *τ*_{*UL*11} *=* 2*τ*_{*OTA*1} *+ τ*_{*Tx*1} *+ τ*_{*Rx*1}.

For the first uplink reference signal, a corresponding received signal of the second TRP on the subband k may be represented as:
${Y}_{UE 1 \to 2} = {h}_{2 , k} ⋅ {e}^{j 2 π ⋅ \left({τ}_{OTA 2}+{τ}_{Rx 2}-{τ}_{clock 2}\right) ⋅ k} ⋅ {e}^{j 2 π ⋅ {τ}_{OTA 1} ⋅ k} ⋅ {e}^{j 2 π ⋅ \left({τ}_{Tx 1}+{τ}_{clock 1}\right) ⋅ k} ⋅ {s}_{UL 1 , k} ,$

The second TRP may measure a received signal corresponding to the first uplink reference signal to obtain an uplink delay estimate *τ*_{*UL*21} = (*τ*_{*OTA*1} *+ τ*_{*OTA*2}) *+* (*τ*_{*Tx*2} *+ τ*_{*Rx*1} *+ τ*_{clock2} *- τ*_{*clock*1}).

Similarly, the terminal device may determine the second uplink reference signal based on the correspondence between reference signals and a delay amount obtained by measuring the second downlink reference signal *τ*_{*DL*2}. The terminal device may determine a pre-compensation amount *e*^{*j*2*π*·τ*DL*2*·k*} of the second uplink reference signal on the subband k, where *e*^{*j*2*π*·τ*DL*2*·k*} may be represented as: ${e}^{j 2 π ⋅ {τ}_{DL 2} ⋅ k} = {e}^{j 2 π ⋅ {τ}_{OTA 2} ⋅ k} ⋅ {e}^{j 2 π ⋅ \left({τ}_{Tx 1}+{τ}_{clock 2}\right) ⋅ k} ,$

The terminal device may obtain the second uplink reference signal *s'*_{*UL*2*,k*} carried on the subband k by performing, by using the pre-compensation amount, frequency domain pre-compensation on the uplink reference signal *s*_{*UL*2,*k*} carried on the subband k. In other words, the second uplink reference signal *s'*_{*UL*2,*k*} is an uplink reference signal obtained by performing pre-compensation on the uplink reference signal *s*_{*UL*2,*k*} based on the pre-compensation amount *e*^{*j*2*π*·τ*DL*2*·k*}. *s'*_{*UL*2*,k*} may be represented as: $s {′}_{UL 2} = {e}^{j 2 π ⋅ {τ}_{OTA 2} ⋅ k} ⋅ {e}^{j 2 π ⋅ \left({τ}_{Tx 2}+{τ}_{clock 2}\right) ⋅ k} ⋅ {s}_{UL 2} ,$

The plurality of uplink reference signals sent by the terminal device include the second uplink reference signal, and the plurality of TRPs that provide the CJT service for the terminal device receive the second uplink reference signal from the terminal device. For the second uplink reference signal, a received signal of the second TRP on the subband k may be represented as:
${Y}_{UE 2 \to 2} = {h}_{2 , k} ⋅ {e}^{j 2 π ⋅ \left({τ}_{OTA 2}+{τ}_{Rx 2}-{τ}_{clock 2}\right) ⋅ k} ⋅ {e}^{j 2 π ⋅ {τ}_{OTA 2} ⋅ k} ⋅ {e}^{j 2 π \left({τ}_{Tx 2}+{τ}_{clock 2}\right) ⋅ k} ⋅ {s}_{UL 2 , k}$

For definitions of parameters in the expression in the embodiment shown in FIG. 6, refer to the description in the embodiment shown in FIG. 4. Details are not described herein again. The second TRP may measure a received signal corresponding to the second uplink reference signal to obtain an uplink delay estimate *τ*_{*UL*22}. Pre-compensation performed on the second uplink reference signal in frequency domain is superimposed on various delays introduced in uplink transmission from the terminal device to the second TRP. An uplink delay estimate *τ*_{*UL*22} measured in a delay domain may be represented as *τ*_{*UL*22} = 2*τ*_{*OTA*2} *+ τ*_{*Tx*2} *+ τ*_{*Rx*2}.

For the second uplink reference signal, a received signal of the first TRP on the subband k may be represented as: ${Y}_{UE 2 \to 1} = {h}_{1 k} ⋅ {e}^{j 2 π ⋅ \left({τ}_{OTA 1}+{τ}_{Rx 1}-{τ}_{clock 1}\right) ⋅ k} ⋅ {e}^{j 2 π ⋅ {τ}_{OTA 2} ⋅ k} ⋅ {e}^{j 2 π ⋅ \left({τ}_{Tx 2}+{τ}_{clock 2}\right) ⋅ k} ⋅ {s}_{UL 2 , k}$

The first TRP may measure a received signal corresponding to the second uplink reference signal to obtain an uplink delay estimate *τ*_{*UL*12} = (*τ*_{*OTA*1} *+ τ*_{*OTA*2}) *+* (*τ*_{*Tx*1} + *τ*_{*Rx*2} *+ τ*_{*clock*1} *- τ*_{*clock*2}).

The foregoing uses an example in which two TRPs (that is, the first TRP and the second TRP) perform CJT transmission for the terminal device for description. If there are more than two TRPs performing CJT transmission for the terminal device, a corresponding uplink delay estimate may be obtained in a similar manner based on measurement of the pre-compensated uplink reference signal. Details are not described herein again.

The network side (for example, the first TRP and/or the second TRP) may obtain a first delay difference Δ*τ_{UE}* based on an uplink delay estimate *τ*_{*UL*22} and an uplink delay estimate *τ*_{*UL*11}, where the first delay difference Δ*τ_{UE}* may be represented as: $Δ {τ}_{UE} = 2 \left({τ}_{OTA 2}-{τ}_{OTA 1}\right) + \left({τ}_{Tx 2}+{τ}_{Rx 2}\right) - \left({τ}_{Tx 1}+{τ}_{Rx 1}\right) ,$

It can be learned from the foregoing formula that Δ*τ_{UE}* includes *τ*_{*TOTA*2} *- τ*_{*OTA*1}. Because air interface delay differences *τ*_{*TOTA*2} *- τ*_{*OTA*1} are different for different terminal devices, measurement results of Δ*τ_{UE}* are different for different terminal devices, and Δ*τ_{UE}* may be referred to as a terminal-device-level delay difference.

The network side may further obtain a second delay difference Δτ*_{TRP}* based on an uplink delay estimate *τ*_{*UL*21} and an uplink delay estimate *τ*_{*UL*12}, where the second delay difference Δ*τ_{TRP}* may be represented as: $Δ {τ}_{TRP} = \left({τ}_{Tx 2}-{τ}_{Rx 2}\right) - \left({τ}_{Tx 1}-{τ}_{Rx 1}\right) + 2 \left({τ}_{clock 2}-{τ}_{clock 1}\right) ,$

It can be learned from the foregoing formula that Δ*τ_{TRP}* mainly includes a timing offset *τ*_{clock2} *- τ*_{*clock*1} between the TRP 1 and the TRP 2, and delay differences *τ*_{*Tx*2} *- T_{Rx2}* and *T*_{*Tx*1}-*T*_{*Rx*1} between receive channels and transmit channels. Therefore, Δ*τ_{TRP}* may be referred to as a TRP-level delay difference.

The network side may determine, based on a terminal-device-level delay difference Δ*τ_{UE}* and a TRP-level delay difference Δ*τ_{TRP}* that correspond to a terminal device, a signal delay compensation amount Δ*τ_{UE} +* Δ*τ_{TRP}* used when the first TRP and the second TRP provide a CJT service for the terminal device:
$Δ {τ}_{UE} + Δ {τ}_{TRP} = 2 \left\{\left({τ}_{OTA 2}-{τ}_{OTA 1}\right)+\left({τ}_{Tx 2}-{τ}_{Tx 1}\right)+\left({τ}_{clock 2}-{τ}_{clock 1}\right)\right\}$

The network side may determine, based on the delay compensation amount Δ*τ_{UE} + Δτ_{TRP},* a phase compensation amount corresponding to a phase difference between TRP signals on each subcarrier. CJT transmission performance can be improved by compensating the phase difference on each subcarrier.

In an implementation, for a TRP-level delay amount Δ*τ_{TRP},* the network side may configure a plurality of terminal devices to perform S601 and S602. Each terminal device receives a plurality of reference signals to obtain corresponding measurement quantities, performs pre-compensation on a plurality of corresponding uplink reference signals based on the plurality of measurement quantities, and sends the plurality of pre-compensated uplink reference signals. In this case, the network side may obtain, through measurement, a plurality of TRP-level delay amount estimates based on uplink reference signals sent by the plurality of terminal devices, and average the plurality of TRP-level delay amounts Δ*τ_{TRP},* so that estimation errors can be averaged, and TRP-level delay difference estimation precision can be improved. For example, a quantity of terminal devices for which the first TRP and the second TRP provide a CJT service is *L*, and a TRP-level delay difference obtained by the network side through measurement based on a plurality of uplink reference signals sent by a terminal device l may be denoted as Δ*τ_{TRP,l}.* A relatively high-precision average TRP-level delay difference *Δ̅τ̅_{TRP}* may be obtained by averaging TRP-level delay differences corresponding to L terminal devices: ${\overline{Δτ}}_{TRP} = \frac{1}{L} {\sum }_{l} Δ {τ}_{TRP , l} ∘$

According to the foregoing solution, the terminal device receives a plurality of downlink reference signals, and determines a plurality of uplink reference signals based on delay amounts obtained by measuring the plurality of downlink reference signals. The terminal device sends the uplink reference signal to a network side, so that the network side can obtain a delay compensation amount between the plurality of TRPs based on the received uplink reference signal, to determine a phase compensation amount corresponding to a phase difference between signals of the TRPs on each subcarrier, and compensate for the phase difference on each subcarrier, in this way, a phase difference that varies with different subcarriers and that is caused by different timing offsets between the TRPs is compensated, so that transmission performance of the plurality of TRPs when the plurality of TRPs transmit data to the terminal device by using the CJT can be improved. On the other hand, the terminal device does not need to quantize and report the measurement amount obtained through measurement, so that reporting overheads of the terminal device can be reduced, a quantization loss of the measurement amount can be reduced, and precision of the phase compensation amount acquired by the network side can be improved. The embodiments shown in FIG. 4 and FIG. 6 describe that one terminal device receives a plurality of downlink reference signals sent by a plurality of TRPs, and assists a network side in compensating for a phase difference that changes with different subcarriers and that is caused by different timing offsets between TRPs by reporting a measurement amount or sending an uplink reference signal that is pre-compensated based on a measurement amount. In another implementation, the network side may configure a plurality of terminal devices to separately receive downlink reference signals sent by different TRPs. For example, one of the plurality of terminal devices may receive one downlink reference signal sent by one TRP. The plurality of terminal devices separately measure a received downlink reference signal, and separately report, to a network side, a measurement quantity obtained by measuring the downlink reference signal received by the plurality of terminal devices, or send, to the network side, an uplink reference signal that is pre-compensated based on a measurement quantity. For example, the first terminal device receives the first downlink reference signal, and the second terminal device receives the second downlink reference signal. The first terminal device and the second terminal device may separately report a measurement amount obtained by measuring the downlink reference signal. The network side may separately obtain, from the two terminal devices, the measurement amount obtained by measuring the first downlink reference signal and the measurement amount obtained by measuring the first downlink reference signal, to determine a phase compensation amount on each subcarrier, so as to compensate for a phase difference on different subcarriers. Alternatively, the first terminal device and the second terminal device may separately send an uplink reference signal determined based on a measurement quantity obtained by measuring a downlink reference signal. For example, the first terminal device and the second terminal device separately send a first uplink reference signal and a second uplink reference signal. The network side may determine a phase compensation quantity on each subcarrier based on the received first uplink reference signal and second uplink reference signal, to compensate for a phase difference on different subcarriers. CJT transmission performance can be improved.

It may be understood that, to implement functions in the foregoing embodiments, the TRP and the terminal on the network side include corresponding hardware structures and/or software modules for performing the functions. A person skilled in the art should be easily aware that, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

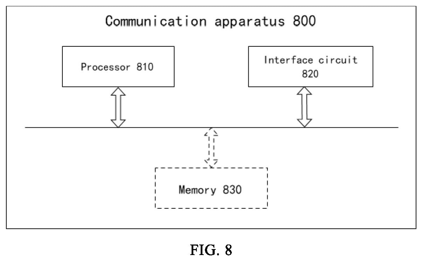

FIG. 7 and FIG. 8 are diagrams of possible structures of communication apparatuses according to embodiments of this application. These communication apparatuses may be configured to implement functions of the terminal device or the TRP in the foregoing method embodiments. Therefore, beneficial effects of the foregoing method embodiments can also be implemented. In embodiments of this application, the communication apparatus may be one of the terminals 120a to 120j as shown in FIG. 1, or the network device 110a or 110b as shown in FIG. 1, or a module (for example, a chip or a chip system) used in the terminal or the network device.

A communication apparatus 700 includes a transceiver unit 720, and the transceiver unit 720 may be configured to receive or send information. The communication apparatus 700 may further include a processing unit 710, and the processing unit 710 may be configured to process instructions or data, to implement a corresponding operation.

It should be understood that when the communication apparatus 700 is a chip disposed in (or used for) a communication device, the transceiver unit 720 in the communication apparatus 700 may be an input/output interface or a circuit of the chip, and the processing unit 710 in the communication apparatus 700 may be a processor in the chip.

Optionally, the communication apparatus 700 may further include a storage unit 730. The storage unit 730 may be configured to store instructions or data. The processing unit 710 may execute the instructions or the data stored in the storage unit, to enable the communication apparatus to implement a corresponding operation.

The communication apparatus 700 may be configured to implement functions of the terminal device or the TRP in the method embodiments shown in FIG. 4 and FIG. 6.

When the communication apparatus 700 is configured to implement the functions of the terminal device in the method embodiment shown in FIG. 4, the transceiver unit 720 is configured to receive a plurality of downlink reference signals. The processing unit 710 is configured to determine first information, where the first information indicates at least one delay amount. The transceiver unit 720 is further configured to send the first information. One of the at least one delay amount is a difference between delay estimates obtained by measuring two of the plurality of downlink reference signals, or one of the at least one delay amount is a delay estimate obtained by measuring one of the plurality of downlink reference signals.

When the communication apparatus 700 is configured to implement the functions of the TRP in the method embodiment shown in FIG. 4, the TRP sends a second downlink reference signal; and the TRP receives first information, where the first information indicates at least one delay amount. One of the at least one delay amount is a difference between delay estimates of two of the plurality of downlink reference signals; or one of the at least one delay amount is a delay estimate of one of the plurality of downlink reference signals. The plurality of downlink reference signals include the second downlink reference signal.

For more detailed descriptions of the processing unit 710 and the transceiver unit 720, refer to related descriptions in the method embodiment shown in FIG. 4.

When the communication apparatus 700 is configured to implement the functions of the terminal device in the method embodiment shown in FIG. 6, the transceiver unit 720 is configured to receive a plurality of downlink reference signals. The transceiver unit 720 is configured to receive the plurality of downlink reference signals. The processing unit 710 is configured to determine each of a plurality of uplink reference signals based on a measurement quantity obtained by measuring a corresponding downlink reference signal. The transceiver unit 720 is further configured to send the plurality of uplink reference signals.

When the communication apparatus 700 is configured to implement the functions of the TRP in the method embodiment shown in FIG. 6, the processing unit 710 is configured to determine to send a third downlink reference signal, and the transceiver unit 720 is configured to send the third downlink reference signal. The transceiver unit 720 is further configured to receive a third uplink reference signal, where the first uplink reference signal is determined based on a measurement quantity of the third downlink reference signal.

For more detailed descriptions of the processing unit 710 and the transceiver unit 720, refer to related descriptions in the method embodiment shown in FIG. 6.

It should be understood that the transceiver unit 720 in the communication apparatus 700 may be implemented through a communication interface (for example, a transceiver, a transceiver circuit, an input/output interface, or a pin). When the communication interface is a transceiver, the transceiver may include a receiver and/or a transmitter. The processing unit 710 in the communication apparatus 700 may be implemented through at least one processor, or the processing unit 710 in the communication apparatus 700 may be implemented through at least one logic circuit. Optionally, the communication apparatus 700 further includes a storage unit, and the storage unit may be implemented through a memory.

As shown in FIG. 8, a communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to: store instructions executed by the processor 810, or store input data required by the processor 810 to run the instructions, or store data generated after the processor 810 runs the instructions.

In an implementation, the memory 830 may alternatively be integrated into the processor 810, or may be independent of the processor 810.

When the communication apparatus 800 is configured to implement the method shown in FIG. 4, the processor 810 is configured to implement the functions of the processing unit 710, and the interface circuit 820 is configured to implement the functions of the transceiver unit 720.

When the communication apparatus is a chip used in a terminal device, the chip in the terminal device may implement functions of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a module used in a network device, the module in the network device may implement the functions of the TRP in the foregoing method embodiments. The module in the network device receives information from another module (for example, a radio frequency module or an antenna) in the network device, where the information is sent by a terminal device to the network device. Alternatively, the module in the network device sends information to another module (for example, a radio frequency module or an antenna) in the network device, where the information is sent by the network device to a terminal device. The module in the network device herein may be a baseband chip of the network device, or may be a DU or another module. The DU herein may be a DU in an open radio access network (open radio access network, O-RAN) architecture.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any regular processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in an access network device or a terminal device. The processor and the storage medium may alternatively exist as discrete components in the access network device or the terminal device.

According to the methods provided in embodiments of this application, this application further provides a computer program product. The computer program product includes computer program code. When the computer program code is executed by one or more processors, an apparatus including the processor is enabled to perform the methods in embodiments shown in FIG. 4 and FIG. 6.

All or some of the foregoing embodiments may be implemented by software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus.

According to the methods provided in embodiments of this application, an embodiment of this application further provides a computer-readable storage medium, and the computer-readable storage medium stores the computer program or the instructions. When the computer program or the instructions are run by one or more processors, an apparatus including the processor is enabled to perform the methods in embodiments shown in FIG. 4 and FIG. 6.

The computer program or the instructions may be stored in the computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by a computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

According to the methods provided in embodiments of this application, an embodiment of this application further provides a communication system, including the foregoing one or more terminal devices. The system may further include the foregoing one or more TRPs.

In several embodiments provided in this application, it should be understood that the disclosed system, apparatus, and method may be implemented in other manners. For example, the described apparatus is merely an example. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or co mmunication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A signal transmission method, comprising:
receiving a plurality of downlink reference signals;
sending first information, wherein the first information indicates at least one delay amount, wherein
one of the at least one delay amount is a difference between delay estimates obtained by measuring two of the plurality of downlink reference signals; or
one of the at least one delay amount is a delay estimate obtained by measuring one of the plurality of downlink reference signals.

2. The method according to claim 1, wherein
the one of the at least one delay amount is the difference between the delay estimates obtained by measuring the two of the plurality of downlink reference signals, the plurality of downlink reference signals comprise N downlink reference signals, the at least one delay amount comprises N-1 delay amounts, and N is a positive integer; or
the one of the at least one delay amount is the delay estimate obtained by measuring the one of the plurality of downlink reference signals, the plurality of downlink reference signals comprise N downlink reference signals, and the at least one delay amount comprises N delay amounts.

3. The method according to claim 1 or 2, wherein that the first information indicates the at least one delay amount comprises: the first information comprises a quantization bit of each delay amount, wherein
the quantization bit is obtained based on a delay amount and a quantization spacing, and the quantization spacing is indicated by a network device by using signaling; or the quantization spacing is determined by a terminal device, and the first information further indicates the quantization spacing.

4. The method according to claim 1 or 2, wherein that the first information indicates the at least one delay amount comprises: the first information indicates a phase level corresponding to each of the at least one delay amount and a bandwidth corresponding to the phase level.

5. The method according to any one of claims 1 to 4, wherein one of the at least one delay amount occupies M bits in the first information, and M is predefined or is preconfigure d by the network device for a terminal device by using signaling.

6. The method according to any one of claims 1 to 5, wherein the method further comprises:
receiving second information, wherein the second information is used to configure reporting of the at least one delay amount obtained by measuring the plurality of downlink reference signals.

7. The method according to claim 6, wherein
the second information further indicates that a first downlink reference signal is a downlink reference signal used as a reference in the plurality of downlink reference signals, the at least one delay amount comprises a difference between a delay estimate obtained by measuring a reference signal in the plurality of downlink reference signals other than the first downlink reference signal and a first delay estimate, and the first delay estimate is obtained by measuring the first downlink reference signal.

8. The method according to any one of claims 1 to 7, wherein the plurality of downlink reference signals are reference signals from a plurality of TRPs.

9. The method according to claim 8, wherein the method further comprises:
receiving data of coherent joint transmission from the plurality of TRPs, wherein the data of the coherent joint transmission is obtained by processing the at least one delay amount.

10. A signal transmission method, comprising:
sending a second downlink reference signal; and
receiving first information, wherein the first information indicates at least one delay amount, wherein
one of the at least one delay amount is a difference between delay estimates of two of a plurality of downlink reference signals; or
one of the at least one delay amount is a delay estimate of one of a plurality of downlink reference signals, wherein
the plurality of downlink reference signals comprise the second downlink reference signal.

11. The method according to claim 10, wherein the method further comprises:
determining, based on the at least one delay amount, a phase compensation value corresponding to the plurality of downlink reference signals.

12. The method according to claim 10 or 11, wherein
the one of the at least one delay amount is the difference between the delay estimates obtained by measuring the two of the plurality of downlink reference signals, the plurality of downlink reference signals comprise N downlink reference signals, the at least one delay amount comprises N-1 delay amounts, and N is a positive integer; or
the one of the at least one delay amount is the delay estimate obtained by measuring the one of the plurality of downlink reference signals, the plurality of downlink reference signals comprise N downlink reference signals, and the at least one delay amount comprises N delay amounts.

13. The method according to any one of claims 10 to 12, wherein that the first information indicates the at least one delay amount comprises: the first information comprises a quantization bit of each delay amount, wherein
the quantization bit is obtained based on a delay amount and a quantization spacing, and the quantization spacing is indicated by a network device by using signaling; or the quantization spacing is determined by a terminal device, and the first information further indicates the quantization spacing.

14. The method according to any one of claims 10 to 12, wherein that the first information indicates the at least one delay amount comprises: the first information indicates a phase level corresponding to each of the at least one delay amount and a bandwidth corresponding to the phase level.

15. The method according to any one of claims 10 to 14, wherein one of the at least one delay amount occupies M bits in the first information, and M is predefined or is preconfigured by the network device for a terminal device by using signaling.

16. The method according to any one of claims 10 to 15, wherein the method further comprises:
sending second information, wherein the second information is used to configure the terminal device to report the at least one delay amount obtained by measuring the plurality of downlink reference signals.

17. The method according to claim 16, wherein the second information further indicates that a first downlink reference signal is a downlink reference signal used as a reference in the plurality of downlink reference signals, the at least one delay amount comprises a difference between a delay estimate obtained by measuring a reference signal in the plurality of downlink reference signals other than the first downlink reference signal and a first delay estimate, and the first delay estimate is obtained by measuring the first downlink reference signal.

18. The method according to any one of claims 10 to 17, wherein the plurality of downlink reference signals are reference signals sent by a plurality of TRPs.

19. The method according to claim 18, wherein the method further comprises:
sending data of coherent joint transmission performed with at least one TRP, wherein the data of the coherent joint transmission is obtained by processing the at least one delay amount.

20. A signal transmission method, comprising:
receiving a plurality of downlink reference signals; and
sending a plurality of uplink reference signals, wherein the plurality of uplink reference signals correspond to the plurality of downlink reference signals, and each of the plurality of uplink reference signals is determined based on a measurement quantity obtained by measuring a corresponding downlink reference signal.

21. The method according to claim 20, wherein the method further comprises:
receiving third information, wherein the third information indicates a correspondence between the plurality of downlink reference signals and the plurality of uplink reference signals.

22. The method according to claim 20 or 21, wherein the plurality of uplink reference signals are in one-to-one correspondence with the plurality of downlink reference signals.

23. The method according to any one of claims 20 to 22, wherein the measurement quantity is used for phase compensation or delay compensation of an uplink reference signal.

24. A signal transmission method, comprising:
sending a third downlink reference signal; and
receiving a third uplink reference signal, wherein the third uplink reference signal is determined based on a measurement quantity of the third downlink reference signal.

25. The method according to claim 24, wherein the method further comprises:
sending third information, wherein the third information indicates a correspondence between a plurality of downlink reference signals and a plurality of uplink reference signals, and one uplink reference signal in the correspondence is determined based on a measurement quantity obtained by measuring a corresponding downlink reference signal, wherein
the third downlink reference signal corresponds to the third uplink reference signal in the correspondence.

26. The method according to claim 25, wherein the plurality of uplink reference signals are in one-to-one correspondence with the plurality of downlink reference signals.

27. The method according to claim 25 or 26, wherein the plurality of uplink reference signals correspond to a plurality of transmission points, and the method further comprises:
determining a first delay difference based on a first uplink delay estimate and a second uplink delay estimate, wherein the first uplink delay estimate is obtained based on an uplink reference signal that is received by a first transmission point and that corresponds to the first transmission point, and the second uplink delay estimate is obtained based on an uplink reference signal that is received by a second transmission point and that corresponds to the second transmission point;
determining a second delay difference based on a third uplink delay estimate and a fourth uplink delay estimate, wherein the third uplink delay estimate is obtained based on an uplink reference signal that is received by the first transmission point and that corresponds to the second transmission point, and the fourth uplink delay estimate is obtained based on an uplink reference signal that is received by the second transmission point and that corresponds to the first transmission point; and
determining, based on the first delay difference and the second delay difference, a delay compensation amount for data of coherent joint transmission of the first transmission point and the second transmission point.

28. The method according to any one of claims 24 to 27, wherein the measurement quantity is used for phase compensation or delay compensation of an uplink reference signal.

29. A communication apparatus, configured to implement the method according to any one of claims 1 to 9, or configured to implement the method according to any one of claims 10 to 19, or configured to perform the method according to any one of claims 20 to 23, or configured to perform the method according to any one of claims 24 to 28.

30. A communication apparatus, comprising at least one processor, wherein the processor is coupled to a memory;
the memory is configured to store a program or instructions; and
the at least one processor is configured to execute the program or the instructions, to enable the apparatus to implement the method according to any one of claims 1 to 9, or implement the method according to any one of claims 10 to 19, or implement the method according to any one of claims 20 to 23, or implement the method according to any one of claims 24 to 28.

31. A computer-readable storage medium, comprising a computer program, wherein when the computer program is run by one or more processors, an apparatus comprising the processor is enabled to perform the method according to any one of claims 1 to 28.
